# EUROPEAN PATENT APPLICATION

(11) **EP 2 083 575 A1**
(43) Date of publication of application: **29.07.2009**
(21) Application number: 08150521.6
(22) Date of filing: 22.01.2008
(51) Int. Cl.: H04Q 1/06, H04Q 1/14

(54) **Carrier for telecommunications component, with access aperture**

(71) Applicant: 3M Innovative Properties Company, St. Paul MN 55144-1000 (US)
(72) Inventor: Denter, Friedrich, 44575 Castrop-Rauxel (DE); Bund, Christine, 42111 Wuppertal (DE)
(74) Representative: Bergen, Katja

(57) **Abstract**

A back mount frame (1) for use in a telecommunications assembly has at least one access aperture (9) therein and comprises a cable-fixing structure (10, 11) to which at least one cable can be attached without obstructing the access aperture(s). The access aperture (9) provides access to a telecommunications component mounted in the carrier and/or provides passage for at least one cable or cable assembly. A telecommunications assembly is described in which at least one telecommunications component (40a-d) is releasably-mounted on the carrier; at least one cable (20, 23) is attached to the cable-fixing structure and some, at least, of the wires of the cable are connected to the telecommunications component; and a cable/ cable assembly (50) passes through the/an access aperture (9) in the carrier and is connected to the telecommunications component.

## Description

The invention relates to carriers for telecommunications components, for example telecommunications modules, for use at distribution points in telecommunications systems. The invention also relates to telecommunications assemblies comprising a carrier and at least one telecommunications component.

In the field of telecommunications, numerous customers (also called subscribers) are connected with the exchange (also known as the switch) of a telecommunications company via telecommunications lines and modules. A telecommunications module establishes electrical connections between incoming wires and outgoing wires. A plurality of telecommunications modules can be assembled, possibly with other telecommunications components, at a distribution point, such as a main distribution frame located in the central office of a telecommunications company, an intermediate distribution frame, an outside cabinet which may serve several streets or houses, or a distribution point located, for example in an office building or an particular floor of an office building. Some telecommunications lines may be permanently connected with first telecommunications modules, and so called "jumpers", which can be changed, are used to make non-permanent connections between electrical contacts in those first modules and electrical contacts in other modules.

ADSL (asymmetric digital subscriber line)-technology has now spread widely in the field of telecommunications. This technology allows different signals to be transmitted at different frequencies on a single line. The signals are combined at a particular point in the telecommunications line and split at another point. Thus, for the transmission of voice and data signals to a central office, separate voice and data signals from subscribers can be combined and sent via the same line. In the central office the combined signal is split. Likewise, for the transmission of voice and data signals to subscribers, separate voice and data signals from a central office can be combined and sent via the same line. In that case, the combined signal is split at the subscriber side. So-called splitters, which are used to split or combine the signal, can generally be arranged at any distribution point. After a combined signal has been split, the voice signals are directed to other subscribers participating in telephone calls and the data signals are directed to other subscribers participating in data exchange. The so-called POTS (plain old telephone service) can be used to transmit the voice signals, and the data signals can be transmitted via a DSLAM cable to a DSLAM (Digital Subscriber Line Access Multiplexer) where the data is processed.

A telecommunications assembly at a distribution point such as a main distribution frame typically comprises a carrier on which a plurality of telecommunications components, including telecommunications modules, is releasably-mounted. Known carriers comprise rails (or similar components) and/or panels or frames with structures such as openings and/or projections for cooperating with attachment mechanisms on the telecommunications components. An example of a carrier for use in a telecommunications assembly is described in DE 2 980 76 69U.

With the continuing expansion of telecommunications services, there is a growing need for telecommunications assemblies to be as compact as possible and, at the same time, for installation procedures to be simplified so that they can be carried out cost-effectively.

The present invention provides a carrier in which at least one telecommunications component can be releasably mounted, the carrier having at least one access aperture therein and comprising a cable-fixing structure to which at least one cable can be attached without obstructing the access aperture(s), wherein the aperture provides access to a telecommunications component mounted in the carrier and/or provides passage for at least one cable or cable assembly.

The term "telecommunications component" as used herein refers to telecommunications modules and other electronic components employed in telecommunications systems. It includes, for example, components comprising TAM (test and monitoring) equipment contained in housings with associated incoming or outgoing wires.

The term "telecommunications module" is used herein in the conventional sense, well understood in the field of telecommunications, to indicate a module comprising termination strips that establishes electrical connections between incoming and outgoing wires in a telecommunications system.

The term "cable assembly" as used herein means a cable with a telecommunications component connected to it.

The cable-fixing structure of a carrier in accordance with the invention can facilitate the organization of cables in a telecommunications assembly and the establishment of electrical connections to telecommunications components mounted in the carrier, thereby enabling the installation of telecommunications components in the carrier to be carried out comparatively simply and cost-effectively. More especially, certain cables can be pre-wired to the cable-fixing structure of the carrier before telecommunications components are mounted in the carrier, thereby simplifying the installation process. The present invention accordingly also provides a method of mounting a telecommunications component on a carrier as defined above, the method comprising the step of attaching a first cable to the cable-fixing structure of the carrier without obstructing the access aperture(s) in the carrier.

The access apertures in the carrier can further assist in the establishment of electrical connections to telecommunications components mounted in the carrier, and also enable effective use to be made of the space available in the carrier for mounting telecommunications components in that they can allow certain items of a telecommunications assembly to be located outside the carrier but nevertheless remain accessible. The present invention accordingly also provides a method of mounting a telecommunications component on a carrier as defined above, the method comprising the step of passing a further cable or cable assembly through an access aperture in the carrier.

A further advantage offered by a carrier in accordance with the invention is the provision of access, via the access aperture(s), to components mounted inside of the carrier even after telecommunications components and wiring have been installed.

A carrier in accordance with the invention may be provided in the form of a back mount frame. The back mount frame may comprise at least one plate-like portion in which said at least one access aperture is formed. The cable-fixing structure may then comprise a web defined by at least one cut-out portion in that plate-like portion. In one embodiment, the cut-out portion is an access aperture. The back mount frame may be open on one side to receive telecommunications components to be mounted therein: the back mount frame may, for example, have a U-shaped or an L-shaped cross section. The cable-fixing structures may permit the attachment of cables on the opposite side of the back mount frame to the telecommunications components.

A cable attached to the cable-fixing structure of the carrier may comprise a plurality of wires, some at least of which are intended for connection to a telecommunications component mounted in the carrier. A cable/cable assembly that passes through an access aperture in the carrier may comprise a plurality of wires, some at least of which are intended for connection to a telecommunications component mounted in the carrier.

In an embodiment of the invention, the carrier is a back-mount frame intended to receive a plurality of telecommunications modules. A main and/or distribution cable for connection to the telecommunications modules is/are attached to the cable-fixing structure of the back mount frame. An access aperture in the back mount frame provides passage for at least one DSLAM cable for connection to one of the telecommunications modules. The main and/or distribution cables may be divided into cable bundles, one for each telecommunications module, that are also attached to the cable-fixing structure of the back mount frame

By way of example, embodiments of the invention will be described with reference to the accompanying drawings, in which:
Fig. 1 is a perspective view, from one end, of a carrier for telecommunications modules, the carrier being in the form of a back mount frame;
Fig. 2 is a front view of the frame of Fig. 1;
Fig. 3 is a side view of the frame, in the direction of the arrow III in Fig. 2;
Fig. 4 is a back view of the frame;
Fig. 5 is a perspective view of the frame, similar to Fig. 1 but showing the frame provided with screws and brackets for attaching it to a rack;
Fig. 6 is a back view of the frame, similar to Fig. 4 but showing a main cable pre-wired to the frame;
Fig. 7 is similar to Fig. 6 but shows the frame after the addition of a distribution cable;
Fig. 8 is similar to Fig. 7 but shows the frame after the splicing of both the main and distribution cables;
Fig. 9 is a side view of the frame, in the direction of the arrow IX in Fig. 8;
Fig. 10 is a partly-exploded view of a telecommunications assembly incorporating a pre-wired frame as shown in Figs. 8 and 9;
Fig. 11 shows the assembly of Fig. 10 viewed from beneath and in completed form; and
Figs. 12 to 15 are diagrammatic illustrations of alternative uses of the back mount frame of Fig. 1

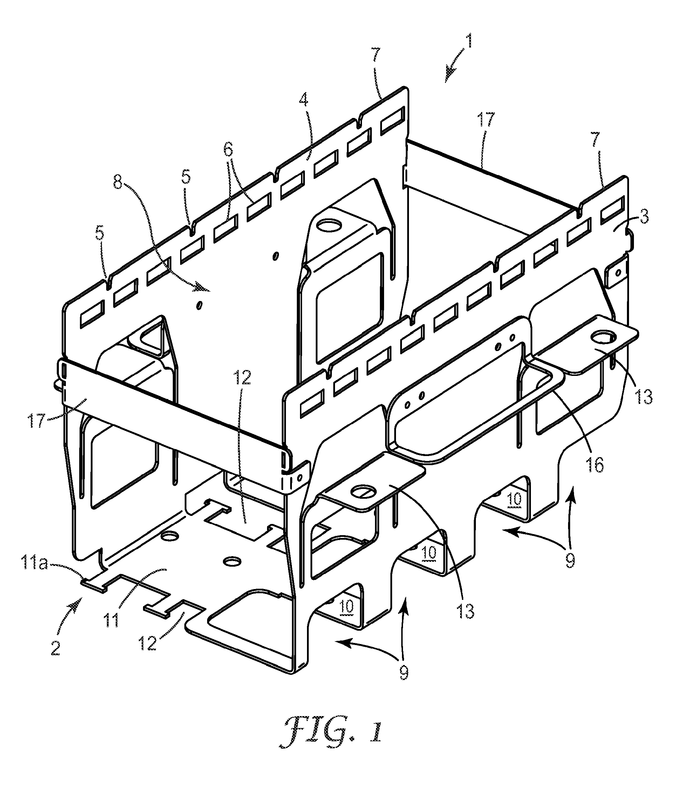

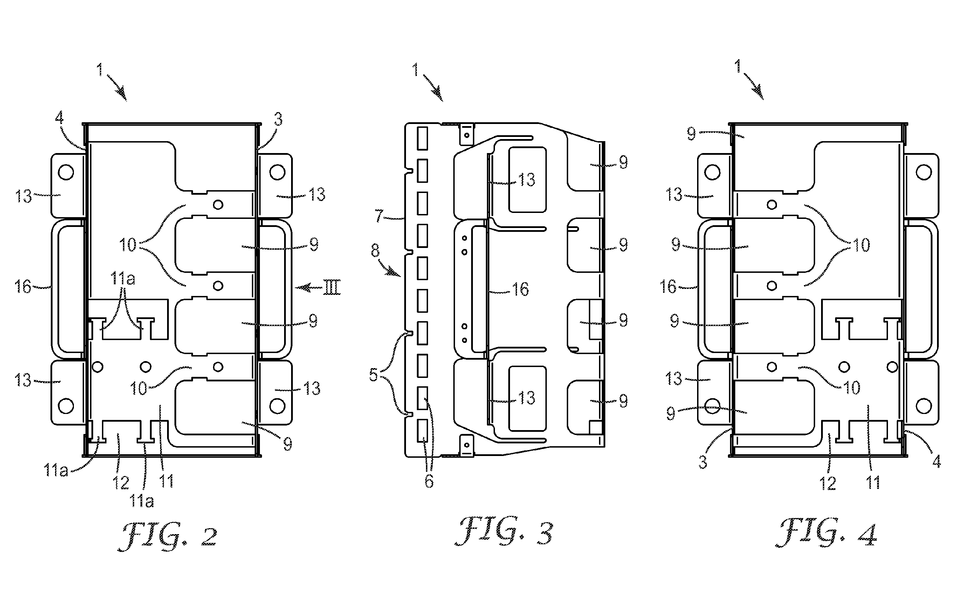

Figs. 1 to 4 show a back mount frame 1 for carrying components of a telecommunications system. In use, as described in greater detail below, the back mount frame is typically mounted on a rack, in a location such as a telecommunications distribution frame or cabinet, and used to carry telecommunications modules (for example, termination modules) and/or associated telecommunications components (for example, splitter units, wire guides, and printed circuit boards).

The back mount frame 1, which may for example be a bent metal component, a cast metal component or an injection-moulded plastic component, comprises a generally-rectangular plate-like back 2 and two generally-rectangular plate-like sides 3, 4 (giving the frame a U-shaped transverse section). Guide slots 5 and openings 6 are formed in the front edge 7 of each side 3, 4 for receiving and releasably-mounting telecommunications components (not shown) pushed into the frame 1 through its open side 8, as will be described below. As shown, the frame 1 is intended to receive four telecommunications modules described in greater detail below. The frame 1 is shown in Fig. 1 as extending horizontally with the open side 8 uppermost, this being one of the orientations in which the frame can be used. The frame 1 could alternatively be used in a generally vertical orientation, with the open side 8 at the front.

It should be understood that the particular configuration of guide slots 5 and attachment openings 6 shown in the drawings is not essential: other configurations and alternative attachment features can be used, depending on the nature of the telecommunications components that are to be positioned in the back mount frame 1.

Four similar access apertures 9 (one for each telecommunications module that the frame 1 is intended to accommodate) are formed along the length of the back 2 of the frame, adjacent the junction between the back 2 and the side 3 of the frame. The apertures 9 occupy about half the width of the back 2 and extend partly into the adjacent side 3. As will be described below, each aperture 9 is sufficiently large to allow the passage therethrough of a telecommunications cable and/or cable assembly. The apertures 9 are separated by narrow webs 10 which function as elements of a cable-fixing structure of the back mount frame, the purpose of which will be described below.

In the other half of the back 2 of the frame (not occupied by the apertures 9) and located towards one end of the frame 1, is another element of the cable-fixing structure of the back mount frame, in this case a cable-fixing area 11. Cut-out portions 12 in the back 2 define two pairs of aligned arms 11a extending in opposite directions from the cable-fixing area 11, the purpose of which will also be described below.

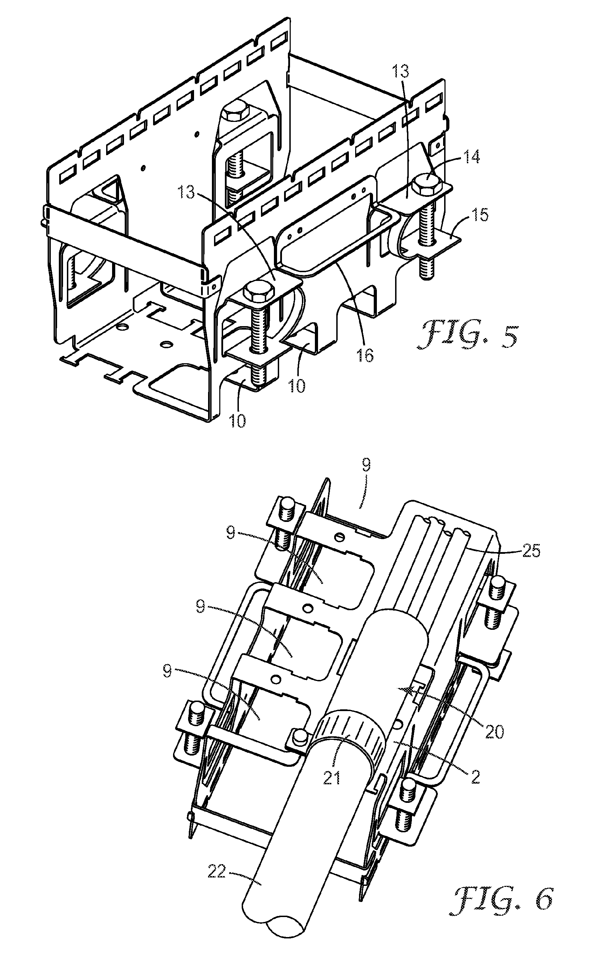

Brackets 13 are bent out from each side 3, 4 of the back mount frame 1 for use in attaching the frame to a rack in a distribution point such as a main distribution frame in a central office. Fig 5 shows the back mount frame provided, for that purpose, with screws 14 and ties 15. Attached on the outside face of each side 3, 4 of the back mount frame, between the brackets 13, is a cable guide 16 in the form of an outwardly-extending arch. The function of this cable guide 16 will be described below.

The back mount frame 1 is strengthened by struts 17 secured across the ends of the frame, between the sides 3, 4. The struts 17 can be omitted if the back mount frame 1 has sufficient structural stability without them.

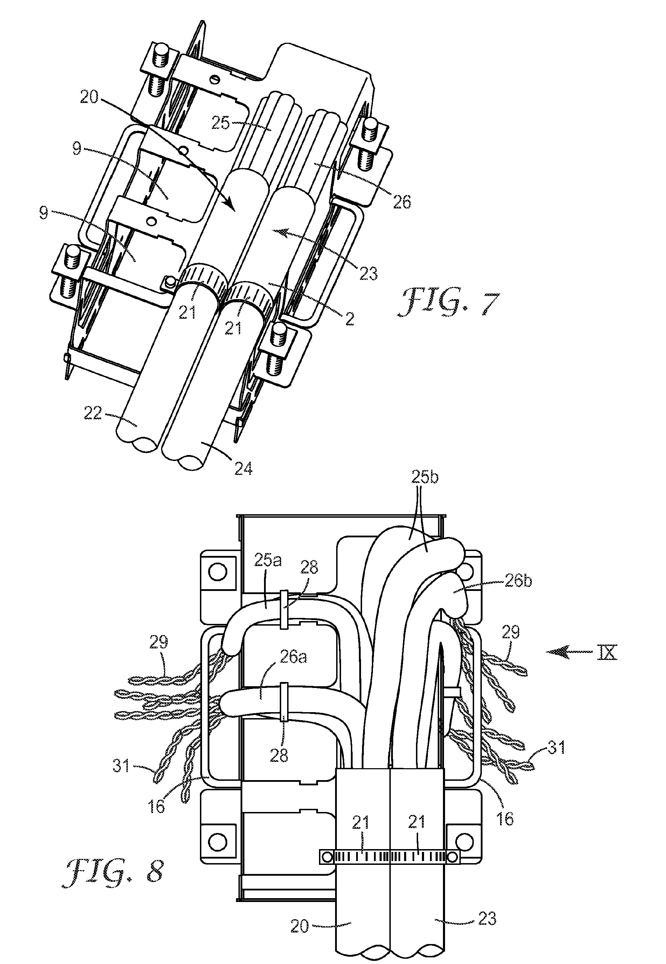

Figs. 6 to 9 illustrate how cables can be pre-wired to the back mount frame 1. Fig. 6 shows a single cable 20 positioned on the outside face of the cable-fixing area 11 of the frame and attached by a cable tie 21. The cable tie 21 may be passed around one of the arms 11a of the cable-fixing area 11 or it may be located in an aperture provided, for that purpose, in the cable-fixing area. If required, the cable 20 may be secured by a further cable tie using whichever of the other cable-fixing features of the cable-fixing area 11 is available. In this example, the cable 20 is a main cable that carries a POTS signal and runs from the distribution point where the back mount frame 1 is located to a smaller distribution point, or from the distribution point to the central office/switch. The outer sheath 22 of the cable 20 has been cut back to allow the twisted wire pairs within the cable to be divided into four bundles 25 to provide respective connections to each telecommunications module that will subsequently be mounted in the back mount frame. As shown in Fig. 6, each of the cable bundles 25 has been provided with a protective sleeve. Fig. 7 shows the back mount frame 1 after the addition of a second cable 23 (in this example, a distribution cable). The distribution cable 23 is also positioned on the outside face of the cable-fixing area 11 of the frame, adjacent the main cable 20, and is also attached by a cable tie 21 to one of the cable-fixing features of the cable-fixing area 11 (i.e. one of the arms 11a or an aperture provided, for that purpose, in the cable-fixing area). The outer sheath 24 of the distribution cable 23 has also been cut back to allow the twisted wire pairs within the cable to be divided into four bundles 26 to provide respective connections to each telecommunications module that will subsequently be mounted in the back mount frame 1. As shown in Fig. 7, each of the cable bundles 26 has also been provided with a protective sleeve.

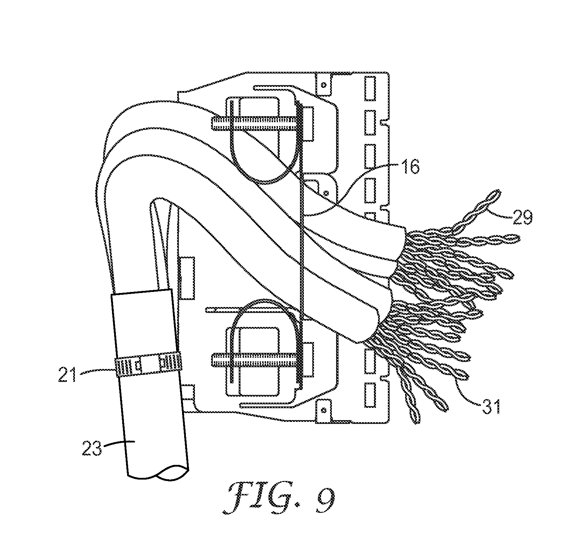

Figs. 8 and 9 show the back mount frame 1 following the pre-wiring of the cable bundles 25, 26 to the frame 1. Two of the cable bundles (25a) from the main cable 20 are positioned, as shown, on the outside face of the back 2 of the frame 1, along one of the cable-fixing elements 10 and attached by a cable tie 28 located in a respective aperture provided, for that purpose, in the cable-fixing element. Those two cable bundles 25a are then bent around the corner of the frame 1 onto the outside face of the side 3 and passed underneath the respective cable guide 16, following which the protective sleeves of the cable bundles 25a are cut back to expose twisted wire pairs 29 for connection to the contacts of the respective telecommunications modules that will subsequently be mounted in the frame. The other two cable bundles (25b) from the main cable 20, on the other hand, are bent as shown immediately around the adjacent corner of the frame 1 onto the outside face of the side 4 and passed underneath the respective cable guide 16 following which the protective sleeves of the cable bundles are cut back to expose further twisted wire pairs 29 for connection to the contacts of the respective telecommunications modules that will subsequently be mounted in the frame.

The cable bundles 26 from the distribution cable 23 are handled similarly. Two of those cable bundles (26a) are positioned on the outside face of the back 2 of the frame 1, along another of the cable-fixing elements 10 and attached by a cable tie 28 located in a respective aperture provided, for that purpose, in the cable-fixing element. Those cable bundles 26a are then bent around the corner of the frame 1 onto the outside face of the side 3 and passed underneath the respective cable guide 16, following which the protective sleeves are cut back to expose twisted wire pairs 31 for connection to the contacts of the respective telecommunications modules that will subsequently be mounted in the frame. The other two cable bundles (26b) from the distribution cable 23, on the other hand, are bent as shown immediately around the adjacent corner of the frame 1 onto the outside face of the side 4 and passed underneath the respective cable guide 16 following which the protective sleeves are cut back to expose further twisted wire pairs 31 for connection to the contacts of the respective telecommunications modules that will subsequently be mounted in the frame.

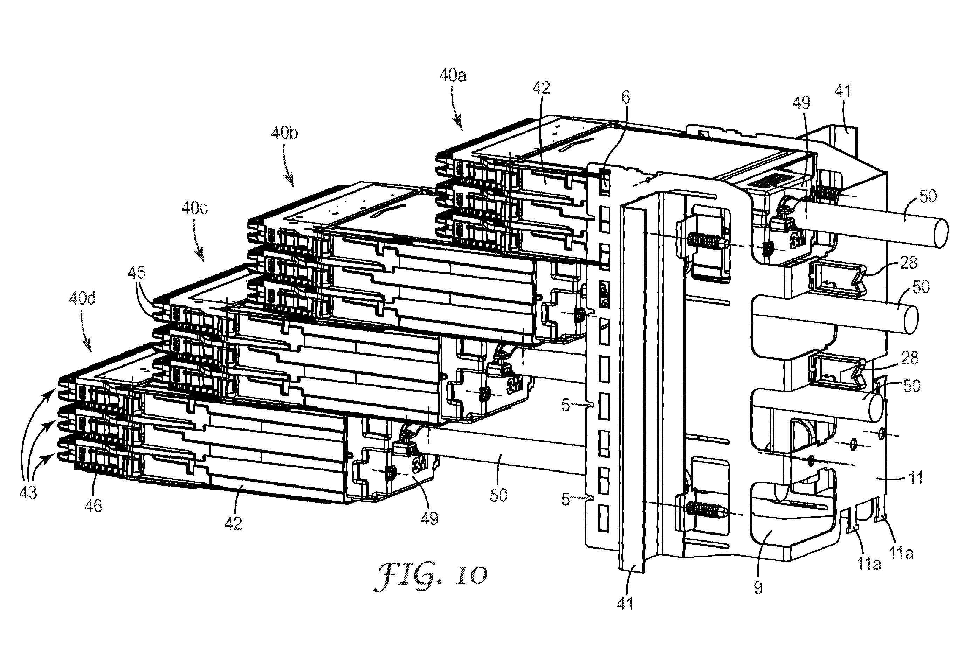

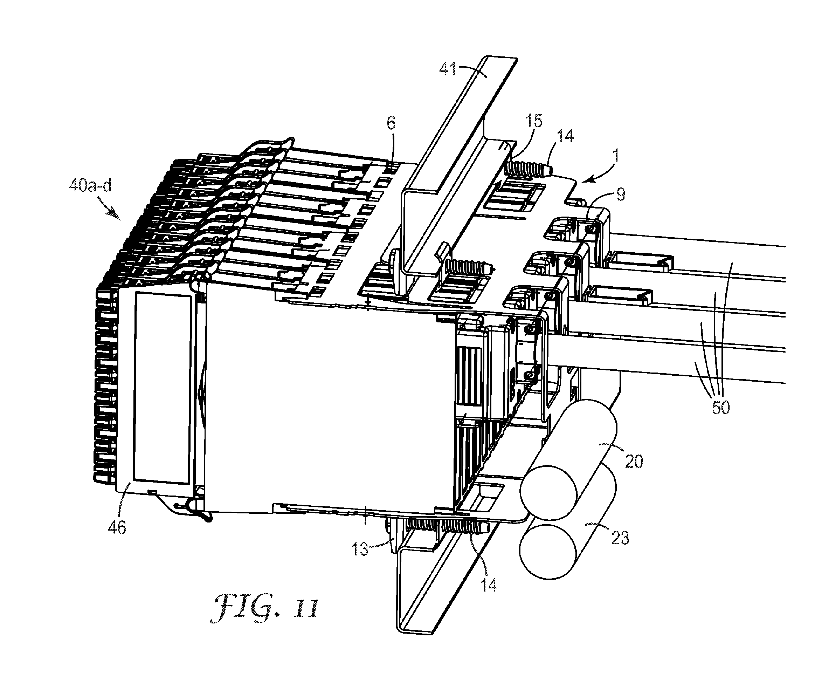

The pre-wired back mount frame 1 shown in Figs. 8 and 9 is now ready to receive telecommunications modules to form a telecommunications assembly, as will be described with reference to Figs. 10 and 11. For clarity, the main and distribution cables 20, 23 have been omitted from Fig. 10 and are only partly shown in Fig. 11, and the cable bundles 25, 26 have been omitted from both Figures (although their cable ties 28 can be seen). The struts 17 of the back mount frame 1 have also been omitted.

The pre-wired back mount frame 1 is intended to receive four identical telecommunications modules 40a-d. In Fig. 10, only one of the modules 40a has so far been mounted in the frame 1. Fig. 11, on the other hand, shows all four modules 40a-d mounted in the frame 1. The frame 1 is mounted on rails 41 of a distribution frame, by means of the fixing brackets 13, using screws 14 and ties 15 as described above with reference to Fig. 5. In this case, the frame 1 is mounted in a vertical orientation rather than the horizontal orientation shown in Figs. 1 to 5.

Each of the telecommunications modules 40a-d comprises a housing 42 in which three termination modules 43 are detachably mounted in any suitable way. Each termination module 43 comprises a termination strip providing two rows of electrical contacts 45 on the front side, a respective wire guide housing 46 and, to the rear of the termination module (within the housing 42 and not visible in the drawings), telecommunications components such as splitter units. All of those items are well known and, since their function is not an essential part of the present disclosure, they will not be described in detail here. Typically, however, telecommunications modules will include termination strips which connect wires coming from subscribers, telephone service or internet/data service. The connection of the wires to the modules is preferably made using insulation displacement contact (IDC) elements but other techniques such as wire wrapping and soldering can be used. Protection and/or splitter modules can optionally be provided on the front or the rear of the modules, and wire guide housings can also optionally be provided to guide wires from the sides to the front and/or rear of the modules. Examples of wire guide housings are described in WO 03/061303 and WO 2007/075635, both in the name of 3M Innovative Properties Company.

Assemblies comprising three termination modules, and the connections thereto, are described in EP-A-1 578 145 in the name of 3M Innovative Properties Company. Telecommunications modules comprising a housing in which several termination modules are detachably mounted are described in co-pending European patent application No. 07113494, filed 31 July 2007 in the name of 3M Innovative Properties Company, to which reference may be made for further information if required. It should be understood, however, that the particular form of the telecommunications modules 40a-d shown in Figs. 10 and 11 is not an essential part of the present disclosure and that many variations are possible. For example, the housings 42 of the modules are optional although, when present, they provide a convenient way of organising the components of a telecommunications assembly.

Each housing 42 is provided with guiding elements that cooperate with the slots 5 in the back mount frame 1 to ensure the correct positioning of the housing in the frame, and with fixing tabs that engage in the openings 6 in the back mount frame to hold the housing in position.

A plug 49 is connected at the rear of each housing 42, providing a data connection, via a DSLAM cable 50, from the respective telecommunications module 40a-d to a DSLAM connector (not shown) located somewhere behind the back mount frame 1. The connection of the DSLAM cable 50 to the DSLAM connector can be made either from the front of the back mount frame 1 or from the rear of the frame, depending on the circumstances. If the DSLAM connector can be passed through the appropriate access aperture 9, the connection to the DSLAM cable 50 can be made from the front side of the frame before the respective telecommunications module 40a-d is placed in position. The DSLAM connector, with the DSLAM cable 50 now connected to it, is then fed through the access aperture 9 to the rear of the back mount frame 1 until, finally, the telecommunications module 40a-d to which the DSLAM cable 50 is connected is guided into the frame and mounted in position. If, on the other hand, the DSLAM connector is only accessible at the rear of the back mount frame 1, it is only the cable 50 that is fed through the access aperture 9 until the telecommunications module 40a-d to which it is connected is guided into the frame and mounted in position. The connection of the DSLAM cable 50 to the DSLAM connector must then be made at the rear of the back mount frame 1. In either case, the final situation will be as illustrated in Fig. 11 with each DSLAM cable 50 passing through a respective one of the access apertures 9 in the back mount frame 1.

The cable bundles 25, 26 from the main and distribution cables 20, 23, on the other hand, pass around the sides 3, 4 of the telecommunications modules 40a-d and under the wire guides 16 as described above (there being a space between the sides of the modules and the rails 41 of the distribution frame for that purpose) so that the wire pairs 29, 31 are available at the front of the back mount frame and can be passed via the wire guides 46 to the front of the telecommunications modules 40a-d and connected to the appropriate contacts 45 of the termination strips.

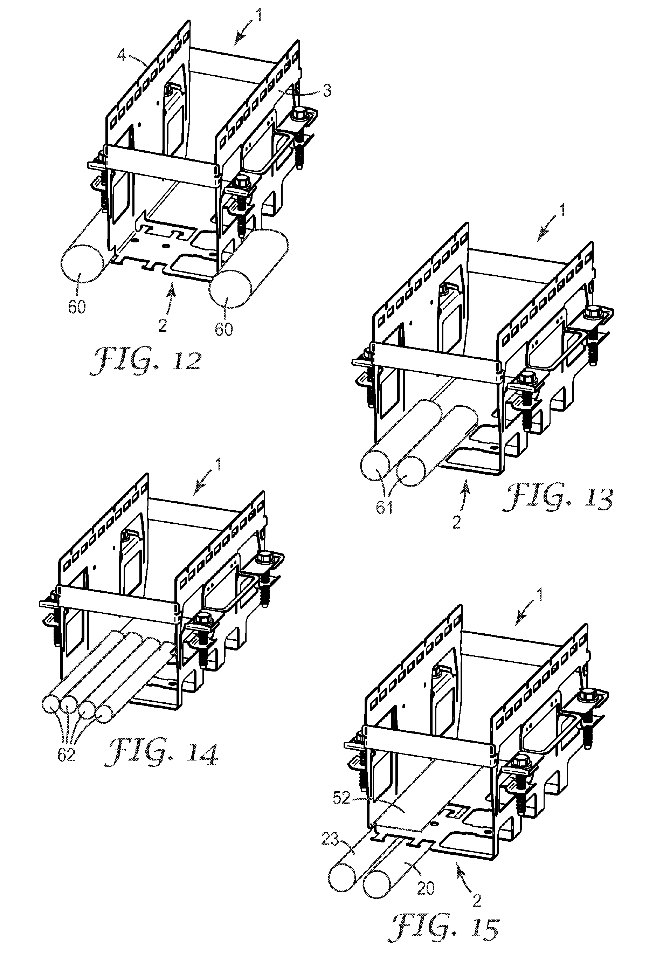

The pre-wiring of the main and distribution cables 20, 23 and the cable bundles 25, 26 as described above with reference to Figs. 8 and 9 assists substantially in the organisation of the cables and simplifies the connections of the wire pairs 29, 31 to the contacts 45 of the termination strips, enabling the installation of any of the telecommunications modules 40a-d into the back mount frame 1 to be carried out comparatively simply and cost effectively. In addition, because the DSLAM cables 50 are now located behind the back mount frame 1, there is no requirement for space on the front side of the frame in which to accommodate them: this is an advantage in view of the increasing demand for space in which to accommodate components on the front side of the frame 1, often in locations in which space is very restricted or, if available, very expensive. However, despite the fact that the DSLAM cables 50 are located behind the back mount frame 1, they are easily accessible on an individual basis because the pre-wiring of the main and distribution cables 20, 23 ensures that each of the access apertures 9 is unobstructed. The benefit of available space on the front side of the back mount frame 1 is illustrated in Fig. 15 which shows, by way of example, a printed circuit board 52 located adjacent the inside face of the back 2 of the frame in a space that would otherwise be occupied by DSLAM cables connected to telecommunications modules on the frame.

It will be appreciated that the number and configuration of the access apertures 9 and the cable-fixing elements 10, 11 of the back-mount frame 1 can be varied, as can the relative areas of the frame that they occupy. For example, in some cases, only one access aperture 9 may be provided, and the area of the back mount frame occupied by the access aperture(s) can be increased or decreased as required.

A back mount frame provided, in accordance with the invention, with at least one access aperture (such as the access apertures 9 shown in the drawings) and a cable-fixing structure (such as the structure 10, 11 shown in the drawings) can be employed in a variety of different situations and is not restricted to use in the particular situation illustrated in Figs. 10 and 11. Thus, the number of telecommunications components that are mounted on the back mount frame could be changed and, in addition to or instead of telecommunications modules, could comprise components such as control modules, test and measurement modules, and printed circuit boards. Likewise, the number and type of cables or cable bundles that are pre-wired to the back mount frame could be changed depending on the nature of the telecommunications components that are to be mounted on the back mount frame. For example, the cables that are pre-wired to the back mount frame could include shielded cables for carrying broadband signals, power cables for connection to active telecommunications components, and control cables for connection to telecommunications control modules (for example, modules that activate/deactivate subscriber services). In addition, the access aperture(s) in the back mount frame can be used for other purposes. For example, a cable that is pre-wired to the back mount frame can be passed through an access aperture to be connected to a component on the back mount frame. In some circumstances, an access aperture in the back mount frame may not be required for the passage of a cable but simply to provide access to a component (for example, a splitter unit or overvoltage protector) that is not readily accessible from the front of the back mount frame, for example because it is located at the rear of a termination module.

Alternative configurations for pre-wired cables that are possible with the back mount frame 1 of Fig. 1 are shown diagrammatically, by way of example, in Figs. 12 to 14. Fig. 12 shows that cables 60 can be mounted one on the outside face of each side 3, 4 of the back mount frame rather than on the outside face of the back 2. Fig. 13 shows that cables 61 can be mounted on the inside face, rather than the outside face, of the back 2 of the back mount frame; and Fig. 14 shows four cables 62, rather than two, mounted in a similar location.

It will be appreciated that the certain features of the back mount frame 1 described above and shown in the drawings are not an essential part of the invention, and could be modified or omitted. For example, if the design of the back mount frame permits, the cable guides 16 on the sides of the frame could be formed as an integral part of the frame, rather than as separate parts attached to the frame. In some cases, the cable guides 16 can be omitted. The features provided on the back mount frame for receiving and mounting the telecommunications components, such as the slots 5 and aperture 6 shown in the drawings, can also be modified. An example of an alternative back mount frame that could be modified by the provision of at least one access aperture and a cable-fixing structure in accordance with the invention is described in the above-mentioned European patent application No. 07113494.

The general shape of a back mount frame in accordance with the invention will be determined by the nature of the telecommunications components with which it is intended to be used: for example, telecommunications modules may be intended to be mounted directly on the back mount frame instead of indirectly via a housing such as those shown at 42 in Fig. 10, and the shape of the frame/carrier may then be modified accordingly. In some cases, the back mount frame may be modified to permit a relative swivelling movement of the termination modules and/or the wire guide housings (when present), for example as described in the above-mentioned EP-A-1 578 145. As a further alternative, a back mount frame having an L-shaped, rather than a U-shaped, cross-section could be used. Examples of back mount frames having an L-shaped cross-section are described in the above-mentioned EP-A-1 578 145 and in US 2007/075635, also in the name of 3M Innovative Properties Company. Other forms of carriers capable of providing the required cable-fixing structures and access apertures could also be used.

## Claims

1. A carrier (1) in which at least one telecommunications component can be releasably mounted, the carrier having at least one access aperture (9) therein and comprising a cable-fixing structure (10, 11) to which at least one cable can be attached without obstructing the access aperture(s), wherein the aperture provides access to a telecommunications component mounted in the carrier and/or provides passage for at least one cable or cable assembly.

2. A carrier as claimed in claim 1, the carrier having a plurality of access apertures (9) therein each of which provides access to a telecommunications component mounted in the carrier and/or provides passage for at least one cable or cable assembly.

3. A carrier as claimed in claim 1 or claim 2, in which the cable-fixing structure (10, 11) is so shaped and/or positioned that a plurality of cables (20, 23, 25, 26) can be attached thereto without obstructing the access aperture(s).

4. A carrier as claimed in claim 3, in which the cable-fixing structure comprises a plurality of cable-fixing elements (10, 11) to each of which at least one cable can be attached.

5. A carrier as claimed in claim 4, in which cable-fixing elements are positioned around the access aperture(s).

6. A carrier as claimed in claim 4, when appended to claim 2, in which cable-fixing elements are positioned between the access apertures.

7. A carrier as claimed in any one of the preceding claims, the carrier being so shaped that a plurality of telecommunications components (40a-d)can be releasably-mounted thereon.

8. A carrier as claimed in any one of the preceding claims, comprising elements (5, 6) for receiving and/or releasably-mounting at least one telecommunications component on the carrier.

9. A carrier as claimed in any one of the preceding claims, the carrier being open on one side to receive the telecommunications component(s).

10. A carrier as claimed in claim 9, in which the cable-fixing structure is so shaped and/or positioned that a cable can be attached thereto on the other side of the carrier.

11. A carrier as claimed in claim 10, comprising a cable guide (16) for guiding a cable between the said one side and the said other side of the carrier.

12. A telecommunications assembly comprising a carrier (1) as claimed in any one of the preceding claims, and at least one telecommunications component (40a-d) releasably-mounted on the carrier, the telecommunications component forming part of a telecommunications system.

13. An assembly as claimed in claim 12, in which at least one cable (20, 23) is attached to the cable-fixing structure and some, at least, of the wires of the cable are connected to the telecommunications component.

14. An assembly as claimed in claim 13 when appended to any one of claims 4 to 6, in which a first cable (20) is attached to one of the cable-fixing elements, and a second cable (25) is attached to another of the cable-fixing elements; the second cable connecting some, at least, of the wires of the first cable to the telecommunications component.

15. An assembly as claimed in claim 14, in which the second cable is a cable bundle formed from some of the wires of the first cable.

16. An assembly as claimed in claim 12, in which a cable/ cable assembly (50) passes through the/an access aperture (9) in the carrier and is connected to the telecommunications component.

17. A method of mounting a telecommunications component on a carrier as claimed in any one of claims 1 to 11, the method comprising the step of attaching a first cable (20, 23, 25, 26) to the cable-fixing structure (10, 11) of the carrier without obstructing the access aperture(s) (9) in the carrier (1).

18. A method as claimed in claim 17, comprising the steps of mounting the telecommunications component on the carrier; and connecting wires of the first cable to the telecommunications component.

19. A method as claimed in claim 17 or claim 18, comprising the step of passing a further cable or cable assembly (50) through an access aperture in the carrier.

20. A method as claimed in claim 19 when appended to claim 18, comprising the step of connecting wires of the further cable or cable assembly to the telecommunications component (40a-d).

21. A method as claimed in claim 18, in which the step of connecting wires of the first cable to the telecommunications component comprises the step of:
forming a cable bundle (25, 26) from some of the wires of the first cable;
attaching the cable bundle to the cable-fixing structure (10) of the carrier without obstructing the access aperture(s)in the carrier; and
connecting wires of the cable bundle to the telecommunications component.

## Amended claims

### Amended claims in accordance with Rule 137(2) EPC.

**1.** A carrier (1) in which at least one telecommunications component can be releasably mounted, the carrier having at least one access aperture (9) therein and comprising a cable-fixing structure (10, 11) to which at least one cable can be attached without obstructing the access aperture(s), wherein the aperture provides access to a telecommunications component mounted in the carrier and/or provides passage for at least one cable or cable assembly, the carrier further comprises at least one plate-like portion, **characterized in that** the at least one aperture is formed in the plate-like portion of the carrier.

**2.** A carrier as claimed in claim 1, the carrier having a plurality of access apertures (9) therein each of which provides access to a telecommunications component mounted in the carrier and/or provides passage for at least one cable or cable assembly.

**3.** A carrier as claimed in claim 1 or claim 2, in which the cable-fixing structure (10, 11) is so shaped and/or positioned that a plurality of cables (20, 23, 25, 26) can be attached thereto without obstructing the access aperture(s).

**4.** A carrier as claimed in claim 3, in which the cable-fixing structure comprises a plurality of cable-fixing elements (10, 11) to each of which at least one cable can be attached.

**5.** A carrier as claimed in claim 4, in which cable-fixing elements are positioned around the access aperture(s).

**6.** A carrier as claimed in claim 4, when appended to claim 2, in which cable-fixing elements are positioned between the access apertures.

**7.** A carrier as claimed in any one of the preceding claims, the carrier being so shaped that a plurality of telecommunications components (40a-d)can be releasably-mounted thereon.

**8.** A carrier as claimed in any one of the preceding claims, comprising elements (5, 6) for receiving and/or releasably-mounting at least one telecommunications component on the carrier.

**9.** A carrier as claimed in any one of the preceding claims, the carrier being open on one side to receive the telecommunications component(s).

**10.** A carrier as claimed in claim 9, in which the cable-fixing structure is so shaped and/or positioned that a cable can be attached thereto on the other side of the carrier.

**11.** A carrier as claimed in claim 10, comprising a cable guide (16) for guiding a cable between the said one side and the said other side of the carrier.

**12.** A telecommunications assembly comprising a carrier (1) as claimed in any one of the preceding claims, and at least one telecommunications component (40a-d) releasably-mounted on the carrier, the telecommunications component forming part of a telecommunications system.

**13.** An assembly as claimed in claim 12, in which at least one cable (20, 23) is attached to the cable-fixing structure and some, at least, of the wires of the cable are connected to the telecommunications component.

**14.** A method of mounting a telecommunications component on a carrier as claimed in any one of claims 1 to 11, the method comprising the step of attaching a first cable (20, 23, 25, 26) to the cable-fixing structure (10, 11) of the carrier without obstructing the access aperture(s) (9) in the carrier (1).
